# EUROPEAN PATENT APPLICATION

(11) **EP 1 440 820 A2**
(43) Date of publication of application: **28.07.2004**
(21) Application number: 04250426.6
(22) Date of filing: 27.01.2004
(51) Int. Cl.: B60B 35/06, B60B 35/08

(54) **A steerable front axle beam assembly**

(30) Priority: 27.01.2003 US 352327
(71) Applicant: ArvinMeritor Technology, LLC, Troy, MI 48084 (US)
(72) Inventor: Dopico Varela, Tomaz, Gahanna Ohio 43230 (US)
(74) Representative: Jones, John Bryn

(57) **Abstract**

A front axle beam assembly (10) is provided comprising a center beam portion (12) having opposing first connections. Knuckles (16) having second connections are secured to the first connections of the beam preferably by threaded fasteners (30). A spindle (18) is pivotally supported on each knuckle by kingpins (20). The center portion of the axle may be constructed from a material different than that of the knuckles. Moreover, the knuckles may be formed by a different process than that of the center axle portion. For example, the center portion may be constructed from an aluminum casting while the knuckles may be constructed from a steel forging. Preferably, the center axle portion and knuckles include complimentary interlocking portions (24,26) that locate the knuckles relative to the center axle portion during assembly. The knuckles and center axle portions are secured at the joint that defines a desired angle selected to minimize stresses at a joint and provide ease of assembly.

## Description

### BACKGROUND OF THE INVENTION

This invention relates to a steerable front axle beam assembly constructed from numerous components fastened together by fastening elements to provide variability in track, drop, and suspension attachment points using common components.

Axles include opposing spindles for supporting a wheel end assembly. Steer axles require that the spindles be supported on a knuckle for moving the spindles relative to the axle beam to steer the vehicle. Therefore, it is common that front steer axle beams include spindles pivotally supported on knuckles. Commercial truck manufacturers are typically required to provide front steer axles having various drops and tracks. That is, customers of commercial axle manufacturers have numerous unique suspension setups that necessitate different front axle beam configurations. Accordingly, a unique axle beam is required for each truck configuration. Therefore, what is needed is a front steerable axle beam configuration that may be reconfigured to provide a variety of axles having different drops, tracks, and suspension attachment points.

### SUMMARY OF THE INVENTION AND ADVANTAGES

The present invention provides a front axle beam assembly comprising a center beam portion having opposing first connections. Knuckles having second connections are secured to the first connections of the beam preferably by threaded fasteners. A spindle is pivotally supported on each knuckle by kingpins. The center portion of the axle may be constructed from a material different than that of the knuckles. Moreover, the knuckles may be formed by a different process than that of the center axle portion. For example, the center portion may be constructed from an aluminum casting while the knuckles may be constructed from a steel forging. Different axle center portions may be selected depending on the desired track and suspension attachment points. Similarly, the knuckles may be selected to provide desired suspension attachment points for linkages, airbags, and/or leaf springs. The knuckles may be selected to achieve a desired axle beam drop. Preferably, the center axle portion and knuckles include complimentary interlocking portions that locate the knuckles relative to the center axle portion during assembly. The knuckles and center axle portions are secured at a joint that defines a desired angle selected to minimize stresses at the joint and provide ease of assembly.

Accordingly, the above invention provides a front steerable axle beam configuration that may be reconfigured to provide a variety of axles having different drops, tracks, and suspension attachment points.

### BRIEF DESCRIPTION OF THE DRAWINGS

Other advantages of the present invention can be understood by reference to the following detailed description when considered in connection with the accompanying drawings wherein:
Figure 1 is a front perspective view of a present invention front axle beam assembly;
Figure 2 is an enlarged exploded perspective view of one end of the front axle beam assembly;
Figure 3 is a front view of another front axle beam assembly configuration;
Figure 4 is a front view of yet another front beam axle assembly configuration;
Figure 5 is a cross-sectional view of the center portion of the front axle beam of Figure 4 taken along lines 5-5; and
Figure 6 is a flowchart of the invention assembly process.

### DETAILED DESCRIPTION OF THE PREFERRED EMBODIMENT

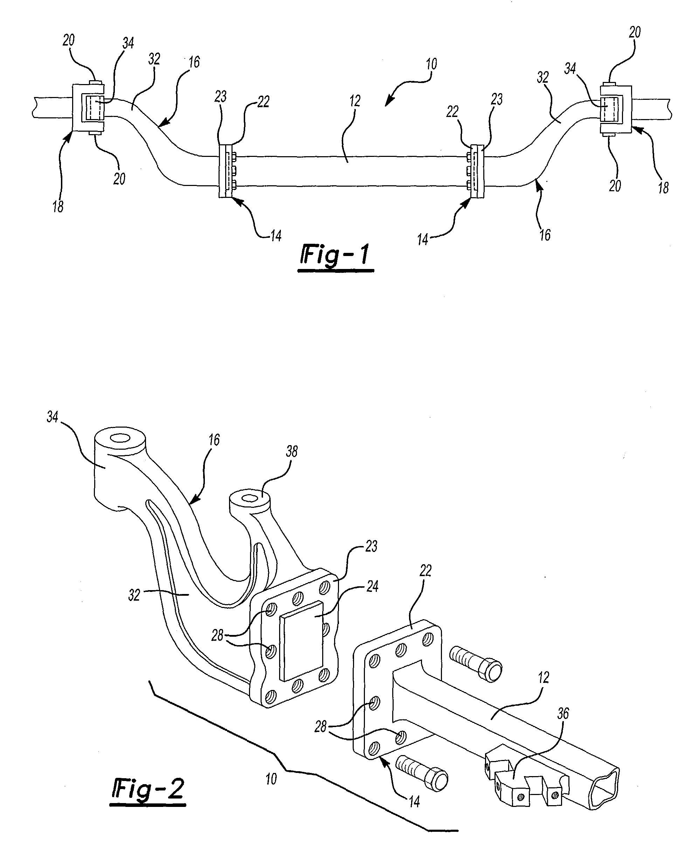

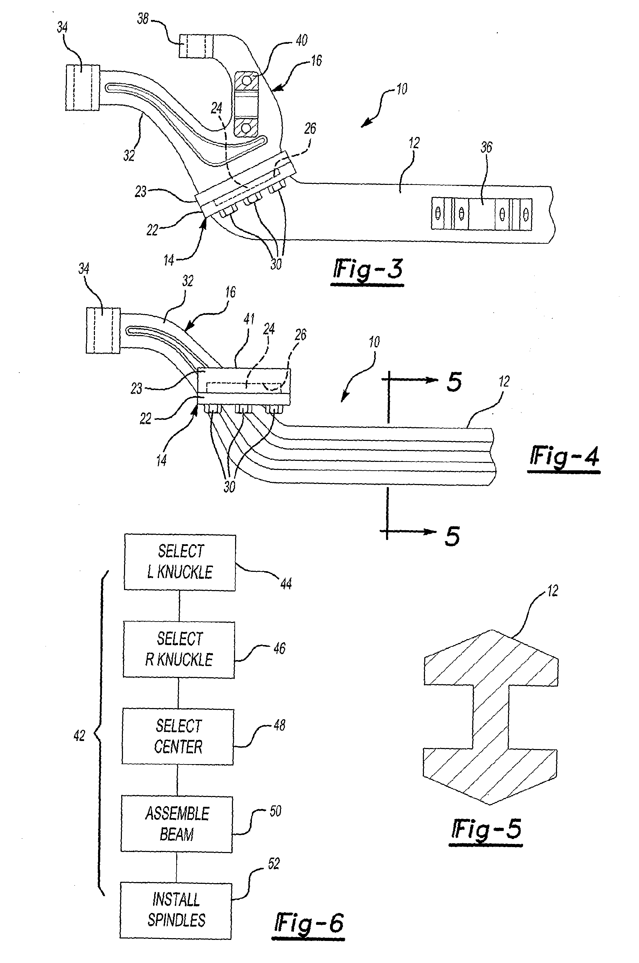

A front beam axle assembly 10 is shown in Figure 1. The axle assembly 10 includes a center portion 12 having opposing ends 14. Knuckle assemblies 16 are secured to each of the opposing ends 14. Spindle assemblies 18 are pivotably supported on the knuckle assembly 16 by kingpins 20, as is well known in the art. The center beam portion 12 includes flanges 22 at the ends 14. Complimentary mating flanges 23 of the knuckle assembly 16 are secured to the flanges 22. Referring now to Figures 2 and 3, the flanges 22 and 23 include complimentary interlocking features that locate the knuckle assembly 16 relative to the center portion 12 during assembly. More specifically, one flange may include a protrusion 24 and the opposing flange may include a recess 26 that receives the protrusion 24. The flanges 22 and 23 may include a plurality of apertures 28 for receiving threaded fasteners 30 to secure the knuckle assembly 16 to the center axle portion 12.

The knuckle assembly 16 includes neck 32 that extends from the flange 23 and terminates in a knuckle 34 having a bore for receiving the kingpin. The combination of the knuckle assembly 16 and the center portion 12 for a particular beam assembly 10 defines the axle drop and track. The track is defined by the distance between the knuckles 34, and the drop is defined by the vertical distance between the airbag or leaf spring mount and the knuckle. The length of the center axle portion 12 primarily defines the track while the knuckle primarily defines the drop.

Separating the knuckle assembly 16 from the center beam portion 12 enables the knuckles and center beam portions to be constructed from different materials and cross-sections to optimize the beam assembly design. For example, the center beam portion 12 may be constructed from a high strength aluminum (in particular an aluminum casting) to reduce the weight of the assembly 10. The knuckles may be formed from a steel forging to increase the strength of the knuckles. Alternatively, the knuckle assembly 16 may be formed from a steel casting. It is to be understood, that any material and process may be employed for the center beam portion 12 and the knuckle assembly 16.

The separate knuckle assembly 16 and center beam portion 12 also enables different attachment features to be employed for a particular front axle beam assembly 10 configuration. For example, the assemblies 10 shown in Figure 2 and 3 include tower supports 38 for receiving an airbag. The center portions 12 include a V-rod support bracket for pivotally securing a V-rod between the axle and vehicle frame. Also the knuckle assembly 16 may include a longitudinal link bracket 40, as shown in Figure 3, for receiving a longitudinal link that is secured between the knuckle assembly 16 and the vehicle frame. Alternatively, the knuckle assembly 16 may include a pad 41 for securing a leaf spring thereto for axle configurations that utilize leaf springs as opposed to airbags.

The flanges 22 and 23 may be oriented in any desirable manner to permit ease of assembly while reducing the stresses at the joint to provide maximum strength. For example, the flanges 22 and 23 may be oriented in a generally vertical direction, as is shown in Figure 1 and 2. Alternatively, the flanges 22 and 23 may be oriented at an angle (e.g. greater than zero degrees but less than 90 degrees relative to horizontal) as shown in Figure 3. Of course, the flanges 22 and 23 may be oriented in a generally horizontal direction, as shown in Figure 4.

The center portions 12 may include any desirable cross-sections. For example, the center portion 12 may include a generally square hollow cross-section, as shown in Figures 2 and 3. Alternatively, the center portion 12 may include an I-beam cross-sectional shape. However, it is to be understood that any desirable cross-section may be used independent of the geometry of the knuckle.

The present invention front beam axle assembly process 42 is generally depicted in Figure 6. The present invention process 42 enables different axle beam assemblies 10 to be constructed from a particular combination of knuckle assemblies 16 and center beam portions 12. The left and right knuckles may be selected, as indicated at blocks 44 and 46. The knuckles are selected based upon the desired drop and suspension attachment points desired for the particular axle beam assembly configuration. The knuckles are constructed from a desired material using a desired manufacturing process. The center beam portion 12 is selected, as indicated at block 48, to obtain the desired track and suspension attachment points. Of course, the knuckles and center position together define the track and drop. The center beam is constructed from another desired material using a desired manufacturing process yielding a desired cross-section. The beam is assembled by engaging the interlocking features to locate the knuckle assembly 16 relative to the axle portion, a indicated at block 50. Preferably a plurality of thread fasteners 30 are used to secure the flanges 22 and 23 to one another. The spindles are installed onto the knuckle assembly 16 by kingpins, as is known in the art, as indicated at block 52.

The invention has been described in an illustrative manner, and it is to be understood that the terminology that has been used is intended to be in the nature of words of description rather than of limitation. Obviously, many modifications and variations of the present invention are possible in light of the above teachings. It is, therefore, to be understood that within the scope of the appended claims the invention may be practiced otherwise than as specifically described.

## Claims

1. A steerable front axle beam assembly (10) comprising:
a center axle portion (12) including opposing ends (14) defining first connections;
a pair of knuckles (16) each having a second connection secured to said center axle portion at said first connections by a fastening element;
a spindle (18) pivotally supported on each of said knuckle by kingpins; and
wherein the center axle beam portion is constructed from a first material and said knuckles are constructed from a second material different than said first material.

2. The assembly according to Claim 1, wherein the knuckles and center beam portion together define a desired track and drop.

3. The assembly according to Claim 1 or 2, wherein said first and second connections are respectively defined by first (22) and second (23) flanges secured to one another by a plurality of fastening elements (30).

4. The assembly according to Claim 3, wherein said flanges include complimentary locating features (24, 26) positioning said knuckle relative to said center axle beam portion.

5. The assembly according to Claim 3 or 4, wherein said flanges are oriented at a desired angle relative to one another, said plurality of fastening element arranged outwardly of said complimentary locating features.

6. The assembly according to any preceding claim, wherein said center axle beam portion includes a first suspension attachment point providing a V-rod attachment bracket.

7. The assembly according to any preceding claim, wherein said knuckle includes a first suspension attachment point providing an air bag support.

8. A method of assembling a steerable front axle beam assembly (10) comprising the steps of:
a) determining a desired axle beam drop and track;
b) determining a desired suspension configuration having suspension attachment points;
c) selecting knuckles (16) and a center axle beam portion (12) from a group of knuckles and center axle beam portions having different characteristics including different drops and suspension attachment points to obtain said desired track, drop, and suspension attachment points; and
d) assembling said knuckles to said center axle beam portion.

9. The method according to Claim 8, wherein spindles are installed onto said knuckles by kingpins (20).

10. The method according to Claim 8 or 9, wherein said different characteristics include different materials, and/or different geometries and/or different cross-sections.

11. The assembly or method according to any preceding claim wherein said center axle portion includes a solid cross-section providing a non-driven front axle.

12. The assembly according to claim 7, wherein said knuckle includes a second suspension attachment point providing a longitudinal link bracket.

13. A steerable front axle beam assembly comprising:
a center axle portion having a longitudinal axis and including opposing ends defining first connections provided by first flanges;
a pair of knuckles each having a second connection provided by second flanges secured to said center axle portion with said first and second flanges secured to one another by fastening elements, said flanges at an angle from a plane normal to said longitudinal axis; and a spindle pivotally supported on each of said knuckle by kingpins.
